# EUROPEAN PATENT APPLICATION

(11) **EP 2 400 147 A1**
(43) Date of publication of application: **28.12.2011**
(21) Application number: 10167326.7
(22) Date of filing: 25.06.2010
(51) Int. Cl.: F03D 1/06

(54) **Root of the blade of a wind turbine**

(71) Applicant: SIEMENS AKTIENGESELLSCHAFT, 80333 München (DE)
(72) Inventor: Kristensen, Jens Jørgen Østergaard, 9240, Nibe (DK); Noerlem, Michael, 9230, Svenstrup (DK); Stiesdal, Henrik, 5000, Odense C (DK)

(57) **Abstract**

The invention relates to a root-end of a blade of a wind turbine and to a wind-turbine blade, which contains this root end.

The root-end contains at least two segments. The segments contain means for their connection to build up the root-end. The segments contain a first segment section, which is prepared for a connection with fiber reinforced components of the blade. The segments contain a second segment section, which is prepared for a connection with a hub of a wind turbine or which is prepared for a connection with pitch-components of a wind turbine.

## Description

The invention relates to a root-end of a blade of a wind turbine and to a wind-turbine blade, which contains this root end.

There are a number of different methods, which are used to manufacture blades of a wind turbine.

It is known to wind roving tapes or roving bundles around a core or mandrel to build up a blade of a wind turbine.

It is also known to produce a blade by two pre-produced half-shells, which are connected. The half-shells are bonded (glued) together along their respective leading and trailing edges. The half-shells are shaped in a way that a common cavity is built up by them within the manufactured blade. This cavity inside may be used to support a beam or the like. The beam may be U-shaped or I-shaped and is used to connect the half-shells by dedicated contact surfaces. This blade-production-method results in a heavy blade due to the needed glue.

A preferred method to manufacture a blade of a wind turbine is disclosed by document EP 1 310 351 A1. The blade is manufactured by help of a closed-mould system. The blade is built up like a sandwich as described below.

A first mould is used to support a number of stacked layers. The layers are put on top of the first mould and on top of each other to build up the three-dimensional shape of the blade.

A cavity within the blade may be prepared by the usage of a balloon, which is filled with air for example. The balloon is embraced by the layers and thus contributes to the three-dimensional shape of the blade.

It is even possible to locate pre-fabricated components within the blade structure, for example along the leading and/or the trailing edge for reinforcement-purposes.

A second mould is connected with the first mould, thus a closed-mould-system is achieved. The closed-mould system embraces the whole blade-structure.

Air is evacuated out of the closed-mould-system, while resin is injected into the closed-mould-system. The resin cures out and the blade is nearly completed.

Now the balloons used may be removed out from the blade, thus a corresponding cavity remains inside the blade.

This blade-production procedure is also known as "Vacuum Assisted Resin Transfer Moulding, VARTM"-process.

Due to the stacked layers wrinkles may occur between and within the blade components. They may occur typically if fiber-mats are arranged on top of each other or if fiber mats are located adjacent to rigid blade-components.

Document EP 1 109 657 A1 describes a method to produce closed composite structures. Fiber reinforced material is placed around a molding core and within a mould-system. The molding core is filled with a material for its shaping. After a curing process the filling material is removed out of the core and the whole molding core is even removed out from a mould-system.

It is known that the root-end section of a blade, which is connected with the hub of the wind turbine directly or via components of a pitch-system, needs to be very strong to cope with all forces acting on the blade. The root-end also has to be designed as a rigid interface of the blade to the hub.

The root-end of the blade needs to be thick and massive, thus a lot of layers and composite material needs to be arranged there.

The root-end of the blade is typically circular-shaped with a diameter of one meter up to five meters.

Due to this dimensions it is very difficult to manufacture the root-end with a uniform thickness and without wrinkles.

Additionally it is very difficult to control and handle the casting process of the root-end. Due to its thickness and due to the used huge number of layers there the infusion and the distribution of resin within the root-end are very difficult.

The thick and massive structure of the root-end will contain a huge and large concentration of resin. Thus the root-end will become very hot while the resin cures out. This may result to a weak structure in this critical blade-area.

It is therefore the aim of the invention to provide an improved root-end of the blade and to provide an improved blade in view to the problems, which are addressed above.

This aim is achieved by the features of claim 1 and by the features of claim 11.

Preferred embodiments of the invention are object of the dependent claims.

According to the invention a root-end of the blade is provided, while the root-end contains at least two segments.

The segments are preferably produced separately and are connected later, when the blade is manufactured.

The segments are designed, arranged and connected in a way that they are shaped as an appropriate root-end portion. This root-end portion is able to cope with all forces, which might act on a blade, which contains the segmented root-end.

The root-end segment is a pre-casted component preferably. It is preferably manufactured by a VARTM-process, which uses a closed-mould system.

Preferably the completed root-end shows a circular-shaped diameter, thus each root-end segment is shaped like an arc of a circle.

Preferably the root-end is divided into six segments.

Adjacent segments are preferably fixed to each other to build up the completed root-end.

The fixation may contain a screw coupling or a dowel connection or the like. A number of holes, which are allocated to surfaces of the adjacent segments, may be used for the connection used.

Preferably each single root-end segment show a number of integrated resin channels. These channels are used to distribute a dedicated amount of resin to connect the root-end segment with the other blade components used. Thus a smaller amount of resin is needed and placed within the root-end in view to the prior art described above.

Preferably each root-end segment contains a first segment section, which is designed and developed for a connection with the other blade components used.

Preferably this first segment is formed like a wedge. Thus a smooth connection or transition of blade components (like fiber mats) with the root-end segment is achieved while wrinkles are avoided within the blade-structure.

Preferably each root-end segment contains a second segment section, which is designed and developed for a connection of the completed root-end with the hub or for a connection of the completed root-end with pitch-components being located asides the hub.

Preferably the segments of the root-end are positioned on a mould as described in the introduction of this application. Fiber reinforced material is placed around the root-end segments during the lay-up work, thus the root-end segments are an integrated part of the blade, which needs to be manufactured.

Thus the segments of the root-end become a fully integrated part of the blade, especially when the well-known VARTM-process is applied to the closed-mould system to finish the blade.

Due to the invention it is very easy to align and to orientate the segments within the blade-production process used.

If a VARTM-process is used tolerances of the closed mould system might be adjusted and balanced very easily.

The invention allows to lay-up two half-parts of a blade separately and in parallel. Each half-part comprises at least one pre-casted root-end segment. Thus the two half-parts of the blade are built-up in parallel, resulting in a reduced amount of working-time needed.

These two half-parts might be brought together and onto a first mould as described above, while fixation means and/or transportation means may be used for the positioning of the two half-parts of the blade. A second mould is used to get the closed-mould-system, which embraces or incorporates the whole blade. Finally the VARTM-process may be applied to the connected half-parts of the blade to finalize it in the well known "single shot" casting process.

It is also possible to manufacture two half parts of the blades by the VARTM-process, using at least one pre-casted root-end segment in each of the half parts. Finally the two half-parts of the blade might be connected by help of glue or the like. Thus the production process is accelerated in view to the prior art.

The invention is shown in more detail by the help of the attached figures.

The figures show preferred configurations only and thus do not limit the scope of the invention.
- FIG 1: shows a preferred root-end segment according to the invention,
- FIG 2: shows a first mould-configuration to produce a root-end segment invented, and
- FIG 3: shows a second mould-configuration to produce another root-end segment invented.

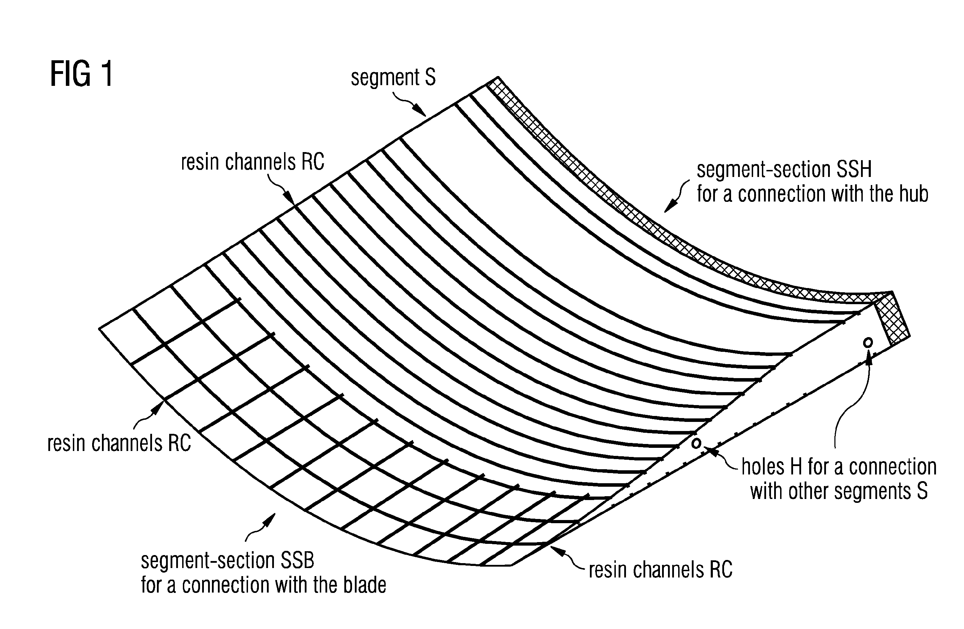

FIG 1 shows a preferred root-end segment S according to the invention.

This segment S is shaped and prepared to build up a circular shaped root-end segment with five other segments.
If all six root-end segments S are connected the circular root-end is finalized.

The segment S shows a number of resin channels RC. The resin channels RC allow the defined distribution of resin within the segment S and along its surface.

These resin channels RC are used to distribute a dedicated amount of resin to connect the root-end segment S with other blade components used. Thus a smaller amount of resin is needed and placed within the root-end in view to the prior art described above.

The resin channels enable an easy control of the resin-infusion when the blade is manufactured by help of a VARTM-process for example.

Due to the reduced amount of resin needed the curing temperature is even asides the root-end, while the blade is manufactured.

Preferably the blade is manufactured by a VARTM-process thus the segment S is placed together with fiber mats and other blade components onto a mould (not shown here). The fiber mats are placed to overlap at least a part of the segment S, thus the fiber mats are used connect the segment S with other blade components.

The segment S shows a first segment section SSB, which is designed and developed for a connection of the segment S with the other blade components - like the fiber mats used.

Preferably this first segment section SSB is formed like a wedge. Thus a smooth connection or transition of the fiber mats with the root-end segment S is achieved. Wrinkles are avoided within the blade-structure due to this smooth transition.

This wedge-shape provides a gradually transition zone from the root-end portion to the rest of the blade structure.

Preferably the segment S contains a second segment section SSH. This section SSH is designed and developed for a connection of the completed blade via its root-end with a wind-turbine hub or for a connection of the completed blade via its root-end with pitch-components, which are located asides the hub for example.

This interface SSH to the hub comprises a number of circumferential connection holes, which are prepared for a connection with the flange of the hub for example or with the flange of a dedicated pitch-component.

For the fixation of the segment S with other adjacent segments a number of holes H are prepared within a surface of the segment S. The holes are part of a bolted connection or of a dowel connection or the like.

The segment S shown in FIG 1 covers a 60° segment of a circle of a completed root-end-portion, thus six segments S are needed to build up the whole root-end.

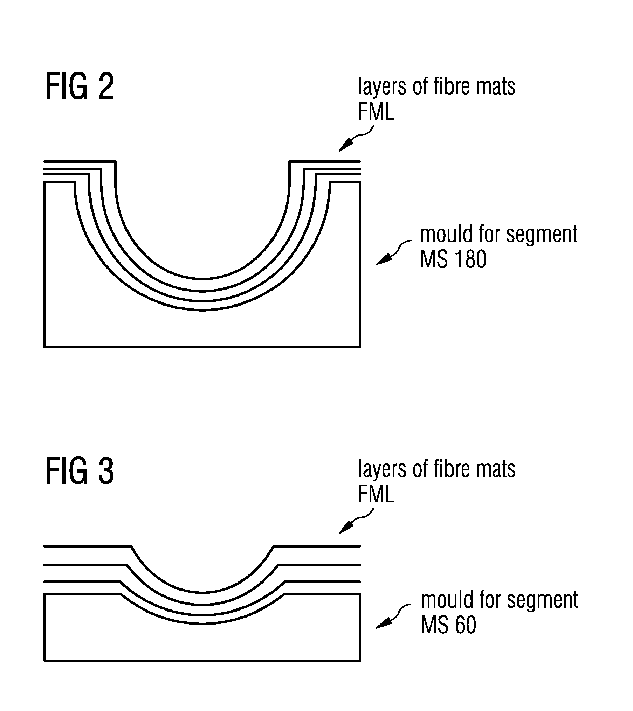

FIG 2 shows a first mould-configuration MS180 to produce a root-end segment as invented.

The mould-configuration MS180 is designed and used to produce or manufacture a root-end segment as a pre-casted component.

This pre-casted component will cover a 180° segment of a circle of a completed root-end-portion, thus two segments are needed to build up a completed root-end.

The mould-configuration MS180 is preferably used within a VARTM-process to manufacture the segment. Thus a number of fiber mates FML is put as layers on top of the mould-configuration MS180. Thus the mould-configuration MS180 is used as lower first mould, which supports all needed segment components (as fiber mats for example).

Another appropriate mould is used later to achieve the closed-mould system for the VARTM-process as described in the introduction of this application.

FIG 3 shows a second mould-configuration MS60 to produce another root-end segment invented.

The mould-configuration MS60 is designed and used to produce or manufacture a root-end segment as a pre-casted component.

This pre-casted component will cover a 60° segment of a circle of a completed root-end-portion, thus six segments are needed to build up a completed root-end.

The mould-configuration MS60 is preferably used within a VARTM-process to manufacture the segment. Thus a number of fiber mates FML is put as layers on top of the mould-configuration MS60. Thus the mould-configuration MS60 is used as lower first mould, which supports all needed segment components (as fiber mats for example).

Another appropriate mould is used later to achieve the closed-mould system for the VARTM-process as described in the introduction of this application.

It is very easy to lay up the fiber mats FML in this mould MS60 compared with the mould MS180.

The lay-out-work in the mould MS60 is less tedious than in the MS180.

Within the MS180 it is more difficult to obtain a uniform thickness and to avoid wrinkles, as the fiber mats FML tend to hang like curtains. They might not follow exactly the shape of the inner-mould MS180, thus pockets and resin rich areas in the casted component may be the result.

Thus the quality of the segments, which are manufactured by help of the mould MS60, is improved in view to the segments, which are manufactured by help of the mould MS180.

It has to be noted that there is at least one another way to manufacture segments for the root-end-portion of the blade (not shown here).

For example a one-piece root-end may be produced like this: a fiber is spun around a cylinder or around another shaped surface. The root-end portion is casted to get a stable root-end-portion. The root end is cut now into a number of root-end segments (for example into a number of two, four or six segments). Thus production time is reduced considerably, while wrinkles are eliminated by this method.

## Claims

1. Root-end of a blade of a wind-turbine,
- where the root-end contains at least two segments,
- where the segments contains means for their connection to build up the root-end,
- where the segments contain a first segment section, which is prepared for a connection with fiber reinforced components of the blade,
- where the segments contain a second segment section, which is prepared for a connection with a hub of a wind turbine or which is prepared for a connection with pitch-components of a wind turbine.

2. Root-end according to claim 1, where the segments are pre-casted components.

3. Root-end according to claim 1 or claim 2, where the connected segments of the root-end show a circular-shaped diameter.

4. Root-end according to claim 1, where the root-end contains six segments or four segments or two segments.

5. Root-end according to claim 1, where adjacent segments are connected by a screw connection or by a dowel connection.

6. Root-end according to claim 5, where the segments contain holes, which are is used for the connection of the segments.

7. Root-end according to claim 1, where the segments contain a number of resin channels, which are an integral part of the segments.

8. Root-end according to claim 1, where the first segment section is shaped like a wedge to achieve a smooth transition zone between the fiber reinforced components of the blade and the segment.

9. Root-end according to claim 1, where the segments of the root-end are positioned on a mould, which is used to support the segments and other blade components for an applied VARTM-process to manufacture a wind turbine blade.

10. Root-end according to claim 9, where the fiber reinforced material is arranged and/or placed around the segments, thus the segments are an integral part of the blade.

11. Blade of a wind-turbine, where the blade contains a segmented root-end according to one of the claims 1 up to 10.
